# EUROPEAN PATENT APPLICATION

(11) **EP 1 280 216 A1**
(43) Date of publication of application: **29.01.2003**
(21) Application number: 01117610.4
(22) Date of filing: 23.07.2001
(51) Int. Cl.: H01M 6/34, H01M 4/08

(54) **Battery using seawater and power generating method**

(71) Applicant: Chang, Tao-Kuang, Taipei Hsien (TW); Chen, Chih-Shen, Taipei Hsien (TW)
(72) Inventor: Chang, Tao-Kuang, Taipei Hsien (TW); Chen, Chih-Shen, Taipei Hsien (TW)
(74) Representative: Casalonga, Axel

(57) **Abstract**

A power generating method of generating power supply by: guiding seawater through a reaction tank (7) having negative electrodes made of magnesium or aluminium alloy and a positive electrode made of silver chloride, causing the negative electrodes (5) to produce the oxidizing reaction of Mg→Mg⁺²+2e⁻ and the positive electrode (6) to produce the reduction reaction of 2AgCl+2e⁻→2Ag+2Cl⁻. A method of manufacturing the AgCl electrode is also disclosed.

## Description

### BACKGROUND OF THE INVENTION

The present invention relates to a power generating method and, more particularly, to a method of generating power supply by means of the application of seawater.

The development of petroleum, coal, and petrochemical energy caused the Industrial Revolution. However, following fast development of the industry, the consumption of energy becomes more and more heavy. The application of natural resources to produce energy also produce waste gases that contain carbon, nitrogen, sulfur, and/or other different chemical compounds. The exhaust substances may cause a severe environmental pollution problem. In order to reduce environmental pollution, green battery energy is promoted. A battery uses hydrogen and oxygen to make a chemical reaction, to further produce electricity. Because electric energy is directly obtained from the chemical reaction, battery energy has the advantages of low pollution and high efficiency.

### SUMMARY OF THE INVENTION

The present invention has been accomplished under the circumstances in view. It is the main object of the present invention to provide a power generating method, which uses seawater to generate electricity. According to the present invention, a reaction tank is prepared having a seawater inlet and a seawater outlet for circulation of seawater, and positive electrode of silver chloride and negative electrodes of magnesium or aluminum alloy are installed in the reaction tank and separated by electrically insulative means. Upon circulation of seawater through the reaction tank, the negative electrodes are caused to produce the oxidizing reaction of Mg→Mg⁺²+2e⁻, and the positive electrode is caused to produce the reduction reaction of 2AgCl+2e⁻→2Ag+2Cl⁻, and therefore electric energy is obtained from the output terminals of the electrodes.

### BRIEF DESCRIPTION OF THE DRAWINGS

FIG. 1 is a flow chart explaining the procedure of the power generating method of the present invention.
FIG. 2 is a flow chart explaining the fabrication of the positive electrode according to the present invention.
FIG. 3 is a sectional view of a seawater battery constructed according to the present invention

### DETAILED DESCRIPTION OF THE PREFERRED EMBODIMENT

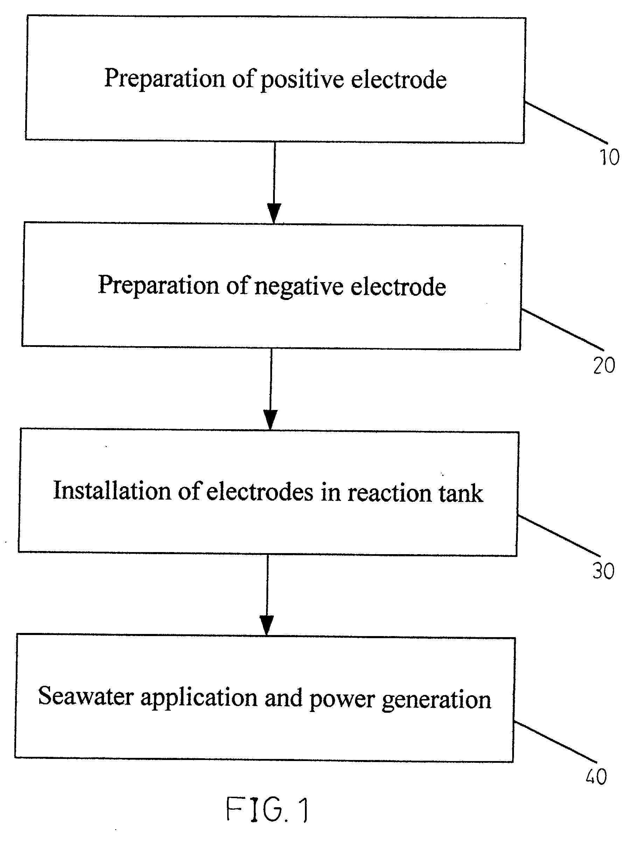

Referring to FIG. 1, the power generating method of the invention comprises the steps of:
10 preparation of positive electrode, where a positive electrode is made by means of using silver chloride (AgCl) as reduction reaction material;
20 preparation of negative electrode, where a negative electrode is made of magnesium alloy or aluminum alloy by stamping;
30 installation of electrodes in reaction tank, where the prepared positive electrode and negative electrode are installed in a reaction tank, which comprises a seawater inlet, a seawater outlet in fluid communication with the seawater inlet, and a polymeric isolation layer separating the positive electrode from the negative electrode; and
40 seawater application and power generation, where seawater is guided into the seawater inlet of the reaction tank toward the seawater outlet for use as electrolyte, causing the positive electrode to produce the oxidizing reaction of Mg→Mg⁺²+2e⁻ and the positive electrode to produce the reduction reaction of 2AgCl+2e⁻→2Ag+2Cl⁻, so as to obtain electric energy from the output of the electrodes.

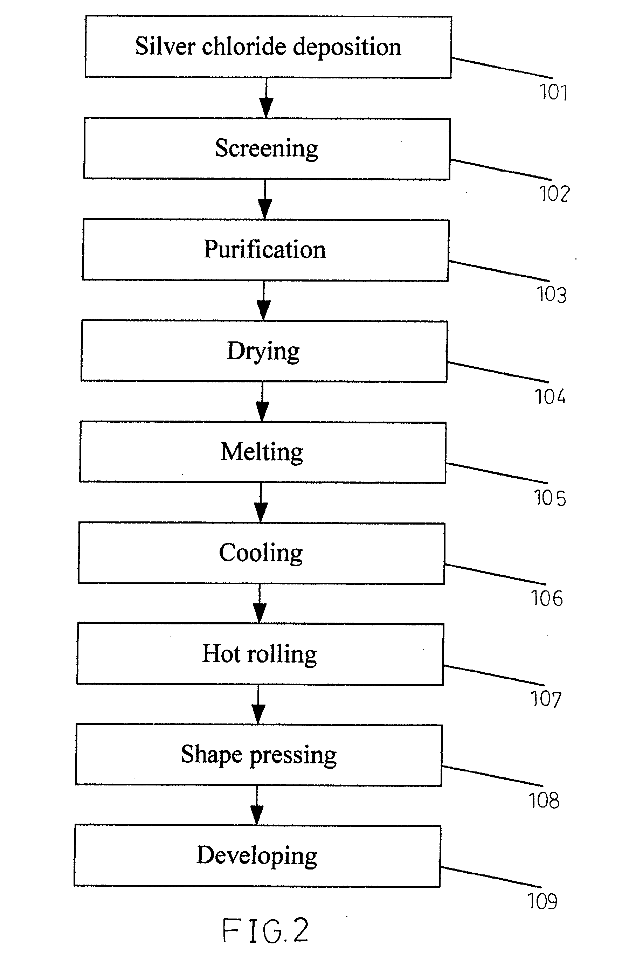

Referring to FIG. 2, the fabrication of the aforesaid positive electrode includes the steps of:
**101** silver chloride (AgCl) deposition, where silver ingot is solved in nitric acid (HNO₃) solution to produce silver nitrate (AgNO₃), and then sodium chloride (NaCl) powder is added to silver nitrate (AgNO₃) to produce silver chloride (AgCl) deposition;
**102** screening, where silver chloride (AgCl) deposition is boiled and then screened to remove impurity;
**103** purification, where silver chloride (AgCl) deposition is purified into high purity silver chloride (AgCl) deposition;
**104** drying, where high purity silver chloride (AgCl) deposition is dried into silver chloride powder;
**105** melting, where silver chloride powder is melted in a mold;
**106** cooling and mold-stripping, where molten silver chloride is cooled down and removed from the mold;
**107** hot rolling, where solid silver chloride thus obtained is treated through a hot rolling process;
**108** shape pressing and **109** developing, where hot-rolled silver chloride is processed into the desired shape.

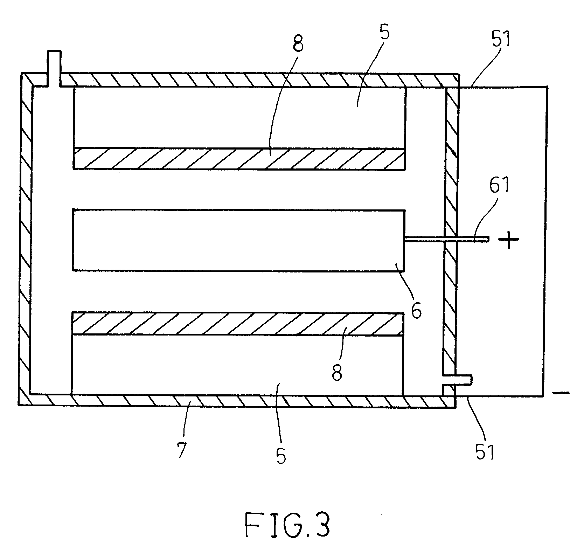

Referring to FIG. 3, a seawater battery is shown comprising a reaction tank **7**, two negative electrodes **5** respectively mounted in top and bottom sides inside the reaction tank **7**, a negative output terminal **51** made of a conductor wire and connected between the negative electrodes **5** and suspending outside the reaction tank **7**, a positive electrode **6** mounted inside the reaction tank **7** and equally spaced between the negative electrodes **5**, a positive output terminal **61** made of a nickel plate and fastened to the positive electrode **6** by spot welding and extended out of the reaction tank **7**, and a polymeric isolation layer **8** mounted inside the reaction tank **7** to prevent electric contact between the positive electrode **6** and the negative electrodes **5**.

Seawater is filled in the reaction tank **7** and used as an electrolyte. Because seawater contains several chemical elements including magnesium chloride (MgCl₂) and sodium chloride (NaCl), it is suitable for use as an electrolyte for the battery. When seawater flows from the seawater inlet of the reaction tank **7** toward the seawater outlet, the negative electrodes **5** are caused to produce the oxidizing reaction of Mg→Mg⁺²+2e⁻ and to discharge electrons, and the positive electrode **6** is caused to produce the reduction reaction of 2AgCl+2e⁻→2Ag+2Cl⁻ and to gain electrons. Therefore, the negative output terminal **51** of the negative electrodes **5** outputs negative voltage, and the positive output terminal **61** of the positive electrode **6** outputs positive voltage. This design of seawater battery is practical for use in a small-scale power generator or power propeller. Further, multiple seawater battery can be connected in series or in parallel for use in a big scale power plant.

## Claims

1. A power generating method comprising the steps of:
i) preparation of positive electrode, where a positive electrode is made by means of using silver chloride (AgCl) as reduction reaction material;
ii) preparation of negative electrode, where a negative electrode is made of magnesium alloy or aluminum alloy by stamping;
iii) installation of electrodes in reaction tank, where the prepared positive electrode and negative electrode are installed in a reaction tank, which comprises a seawater inlet, a seawater outlet in fluid communication with the seawater inlet, and a polymeric isolation layer separating the positive electrode from the negative electrode; and
iv) seawater application and power generation, where seawater is guided into the seawater inlet of the reaction tank toward the seawater outlet for use as electrolyte, causing the positive electrode to produce the oxidizing reaction of Mg→Mg⁺²+2e⁻ and the positive electrode to produce the reduction reaction of 2AgCl+2e⁻→2Ag+2Cl⁻, so as to obtain electric energy from the output of the electrodes.

2. The power generating method of claim 1 wherein said positive electrode is made by an electrode fabrication procedure including the steps of:
i) silver chloride (AgCl) deposition, where a silver ingot is solved in nitric acid (HNO₃) solution to produce silver nitrate (AgNO₃), and then sodium chloride (NaCl) powder is added to the silver nitrate (AgNO₃) thus obtained to produce a silver chloride (AgCl) deposition;
ii) screening, where the silver chloride (AgCl) deposition thus obtained is boiled and then screened to remove impurity;
iii) purification, where the silver chloride (AgCl) deposition thus obtained is purified into a high purity silver chloride (AgCl) deposition;
iv) drying, where the high purity silver chloride (AgCl) deposition thus obtained is dried into silver chloride powder;
v) melting, where the silver chloride powder thus obtained is melted in a mold;
vi) cooling and mold-stripping, where the molten silver chloride thus obtained is cooled down and then removed from the mold;
vii) hot rolling, where the solid silver chloride thus obtained is treated through a hot rolling process;
viii) shape pressing and developing, where the hot-rolled silver chloride thus obtained is processed through a shape pressing and developing process into the desired finished product.

3. A seawater battery comprising a reaction tank having a seawater inlet and a seawater outlet for circulation of seawater through said reaction tank, two negative electrodes made of alloy material selected from one of magnesium alloy and aluminum alloy respectively mounted in top and bottom sides inside said reaction tank, a negative output terminal made of a conductor wire and connected between said negative electrodes and suspending outside said reaction tank, a positive electrode made of silver chloride (AgCl) and mounted inside said reaction tank and equally spaced between said negative electrodes, a positive output terminal made of a nickel plate and fastened to said positive electrode and extended out of said reaction tank and aimed at said negative output terminal, and a polymeric isolation layer mounted inside said reaction tank to prevent electric contact between said positive electrode and said negative electrodes.
